# EUROPÄISCHE PATENTSCHRIFT

(11) **EP 0 623 490 B1**
(45) Veröffentlichungstag und Bekanntmachung des Hinweises auf die Patenterteilung: **09.07.1997**
(21) Anmeldenummer: 94106535.1
(22) Anmeldetag: 27.04.1994
(51) Int. Cl.: B60R 9/045, B60R 9/058

(54) **Dachgepäckträger für Kraftfahrzeuge mit Dachreling**
Roof rack for motor vehicles with roof rails
Porte-bagages pour véhicules à moteur avec rails de toit

(30) Priorität: 06.05.1993 DE 4315024
(43) Veröffentlichungstag der Anmeldung: 09.11.1994
(73) Patentinhaber: Happich Fahrzeug-Dachsysteme GmbH, D-42285 Wuppertal (DE)
(72) Erfinder: Brunner, Harald, D-42659 Solingen (DE); Flüss, Gerrit, D-42105 Wuppertal (DE); Evels,Brigitte, D-42349 Wuppertal (DE)

(56) Entgegenhaltungen:
- EP-A- 0 487 132
- DE-A- 4 223 899
- DE-C- 4 108 058

## Beschreibung

Die Erfindung bezieht sich auf einen Dachgepäckträger für Kraftfahrzeuge mit Dachreling der im Oberbegriff des Anspruchs 1 angegebenen Art.

Ein gattungsgemäßer Dachgepäckträger ist aus der DE 41 08 058 C1 bekanntgeworden. Bei diesem bekannten Dachgepäckträger sind als Befestigungsmittel für den Querträger Abstützbacken und Spannbacken vorgesehen. Dabei sind die Abstützbacken zur Fahrzeugmitte hin liegend am Querträger fixiert angeordnet, während die Spannbacken zur Fahrzeugaußenseite hin liegen und jeweils über einen Spannschraubenbolzen verschiebbar am Querträger sitzen. Durch Anziehen der Spannschraubenbolzen werden die verschiebbaren Spannbacken unter Einschluß der Relingrohre gegen die Abstützbacken gezogen und damit der Querträger mit den Relingrohren verbunden. Es hat sich gezeigt, daß die bei dem bekannten Dachgepäckträger vorgesehenen Spanneinrichtungen den technischen Anforderungen nicht in ausreichendem Maße gerecht werden. Ein erster Nachteil besteht darin, daß die Backen nicht für beliebig gestaltete Relingrohrquerschnitte einsetzbar sondern dem jeweiligen Relingrohrquerschnitt anzupassen sind. Ein weiterer wesentlicher Nachteil der beim bekannten Dachgepäckträger eingesetzten Spannvorrichtungen ist darin zu sehen, daß die zu erzielende Klemmkraft für eine unbedingt zuverlässige Festlegung des Querträgers an den Relingrohren nicht immer ausreicht. Dies ist auf das ungünstige Hebelverhältnis der Spannschraubenbolzen zu den wirksamen Backenbereichen an den Relingrohren zurückzuführen, die eine optimale Kraftübertragung nicht zuläßt. Wie Versuche gezeigt haben, wird beim Anziehen der Spannschraubenbolzen, bedingt durch die ungünstigen Hebelverhältnisse, ein relativ großes Biegemoment auf diese ausgeübt. Dadurch wiederum kann es zum Klemmen und Verkanten der verschiebbaren Spannbacken kommen, wodurch letztendlich die in die Spannschraubenbolzen eingegebene Spannkraft nur teilweise als auf die Relingrohre wirkende Klemmkraft ankommt.

Der vorliegenden Erfindung liegt daher ausgehend von einem Gepäckträger der eingangs genannten Art die Aufgabe zugrunde, diesen so zu gestalten, daß zum einen die Verbindung des Querträgers an beliebig gestalteten Profilquerschnitten der Relingrohre ermöglicht wird und daß zum anderen die Spannvorrichtungen eine optimale Kraftübertragung, die für eine zuverlässige Festlegung des Querträgers an den Relingrohren erforderlich ist, gewährleisten.

Diese Aufgabe wird mit den kennzeichnenden Merkmalen des Anspruchs 1 gelöst.

Gemäß Anspruch 1 sind die Spannbacken der Spannvorrichtungen als schwenkbar gelagerte Klemmhebel ausgebildet, die - wie ohne weiteres einzusehen ist - eine besonders günstige Kraftübertragung im nahezu 1:1-Verhältnis ermöglichen. Durch die schwenkbar gelagerten Klemmhebel wird ein kräftemäßig geschlossenes System gebildet und insbesondere auch erreicht, daß ein Relingrohr unabhängig vom Relingrohrquerschnitt stets an drei Punkten eine Abstützung zwischen den Spannelementen erfährt. Ein weiterer Vorteil der erfindungsgemäßen Maßnahmen ergibt sich noch insofern, als nunmehr die Spannvorrichtungen jeweils als einbaufertige Montageeinheiten zur Verfügung gestellt werden können.

Zweckmäßige Weiterbildungen und vorteilhafte Ausgestaltungen der Erfindung sind in den Unteransprüchen angegeben.

Ein Ausführungsbeispiel der Erfindung wird im folgenden anhand der Zeichnung näher erläutert, und es zeigen:
- Fig. 1 bis 6: jeweils einen Längsschnitt durch einen Querträger eines Dachgepäckträgers im Bereich einer lösbaren Spannvorrichtung und

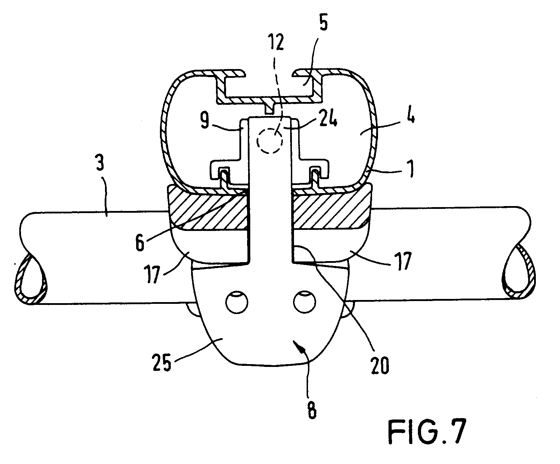

- Fig. 7: einen Querschnitt etwa folgend der Linie VII - VII nach Fig. 1.

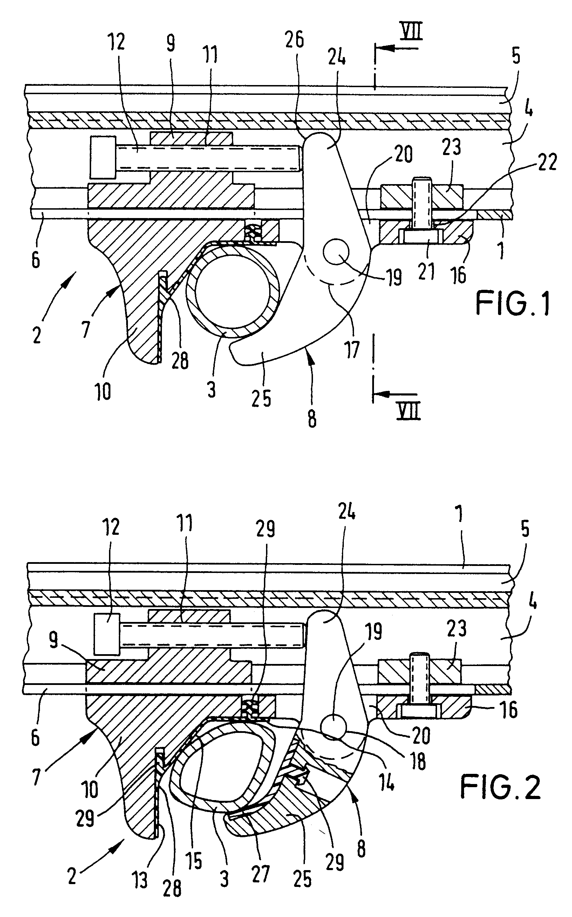

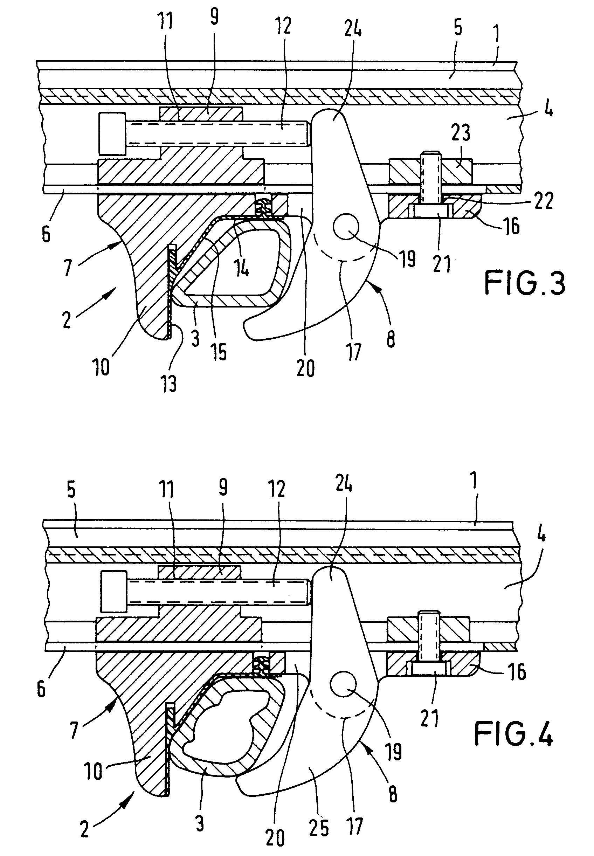

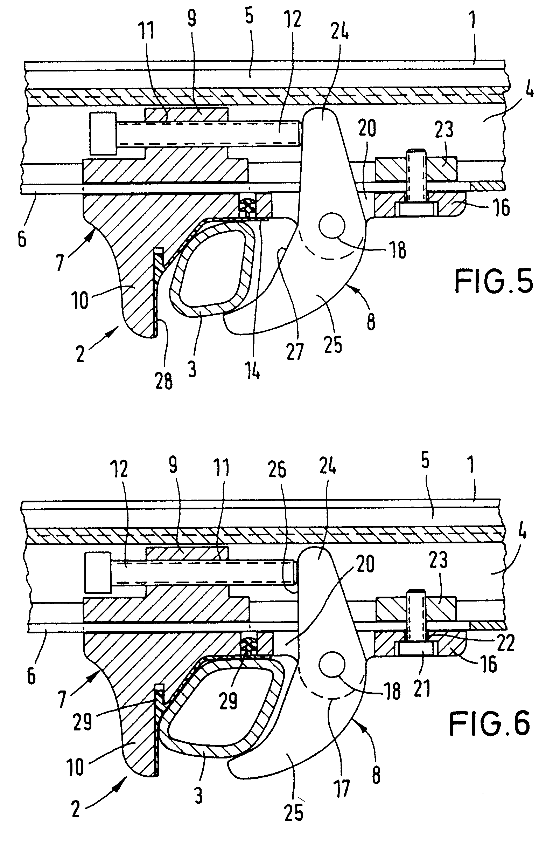

Fig. 1 bis 6 zeigen jeweils einen seitlichen Bereich eines Dachgepackträgers für ein Kraftfahrzeug mit Dachreling. Der Dachgepäckträger besteht im wesentlichen aus Querträgern 1 und einer Spannvorrichtung 2 zur Befestigung an einem Relingrohr 3. Die in den Fig. 1 bis 6 gezeigten Ausführungen unterscheiden sich lediglich durch unterschiedliche Querschnittsprofile der Relingrohre 3 und der dadurch bedingten unterschiedlichen Stellung der Spannvorrichtungselemente zueinander. Beschrieben wird daher lediglich die Ausführungsform nach Fig. 1, die auch für die Fig. 2 bis 6 gilt.

Der Querträger 1 ist ein Hohlprofil mit einem unteren Längskanal 4 und einem oberen Längskanal 5, der nach oben offen ist. In der unteren Wandung des Längskanals 4 ist an beiden Endbereichen des Querträgers 1 etwa mittig ein frei auslaufender Längsschlitz 6 ausgebildet.

Die Spannvorrichtung 2 umfaßt einen Abstützbacken 7 und einen Spannbacken 8. Der zur Fahrzeugaußenseite hin gelegene Abstützbacken 7 besitzt einen oberen Backenteil 9, der im Längskanal 4 angeordnet ist und einen unteren Backenteil 10, der den Querträger 1 nach unten überragt. Die Backenteile 9 und 10 sind über einen im Längsschlitz 6 verschiebbar geführten Steg einstückig miteinander verbunden. Der obere Backenteil 9 weist eine parallel zum Querträger 1 verlaufende mit Innengewinde versehene Bohrung 11 auf, in der eine Schraube 12 drehbar und damit längsbeweglich geführt angeordnet ist. Alternativ kann auch im oberen Backenteil 9 eine in eine Tasche eingelegte Sechskantmutter vorgesehen sein.

Der untere Backenteil 10 weist zunächst Anlageflächen 13, 14, 15 auf, von denen die Anlageflächen 13 und 14 etwa senkrecht zueinander verlaufen, während die Anlagefläche 15 eine schräge Verbindung zwischen diesen Anlageflächen herstellt. An jeweils zumindest zwei der Anlageflächen 13 bis 15 kommt jeweils ein Relingrohr 3 in abgestützer Anlage. Der untere Packenteil 10 weist weiterhin einen zur Fahrzeugmitte hin gerichteten Fortsatz 16, dessen eine Seite am Querträger 1 abgestützt ist und an dessen dem Querträger 1 abgewandten Seite zwei Lagerstützen 17 sitzen, die mit Lageraugen 18 für eine Gelenkachse 19 ausgebildet sind, auf. Zwischen den Lagerstützen 17 ist eine den Abstützbacken 7 bzw. dessen Fortsatz 16 durchsetzende Durchgangsöffnung 20 vorgesehen. Zur axialen Festlegung des Abstützbackens 7 am Querträger 1 dient eine Befestigungsschraube 21, die eine Bohrung 22 am freien Endbereich des Fortsatzes 16 durchsetzt und in die Gewindebohrung eines im Langskanal 4 eingesetzten Klemmelements 23 einschraubbar ist.

Der Spannbacken 8 ist zur Fahrzeugmitte hin gelegen und nach Art eines zweiarmigen, etwa mittig um die horizontal ausgerichtete Gelenkachse 19 schwenkbaren Hebels ausgebildet. Der Spannbacken 8 weist einen oberen Backenteil 24 auf, der die Durchgangsöffnung 20 im Fortsatz 16 des Abstützbackens 7 durchsetzt. Der Spannbacken 8 weist weiterhin einen unteren Backenteil 25 auf, der als Bügelteil ausgebildet ist und mit seiner dem Abstützbacken 7 zugewandten Seite an ein Relingrohr 3 anlegbar ist. Am oberen Backenteil 24 des Spannbackens 8 befindet sich eine Angriffsfläche 26 für das freie Ende der Schraube 12.

Durch Lösen der Schraube 12 kann der untere Backenteil 25 des Spannbackens 8 vom Abstützbacken 7 weggeschwenkt werden und die Spannvorrichtung 2 auf ein Relingrohr 3 gesteckt werden. Ein Anziehen der Schraube bewirkt, daß deren freies Ende an der Angriffsfläche 26 des Spannbackens 8 angreift, so daß dieser um die Gelenkachse 19 schwenkt und mit seinem unteren Backenteil 25 gegen das jeweilige Relingrohr gepreßt wird. Dabei zeigt die Zeichnung deutlich das günstige Hebelverhältnis, wodurch eine optimale Kraftübertragung von der Schraube 12 auf das Relingrohr 3 erreicht wird.

Durch die besondere Gestaltung des unteren Backenteils 9 des Abstützbackens 7 und insbesondere durch die Ausbildung und schwenkbewegliche Lagerung des Spannbackens 8 ist eine universell einsetzbare Spannvorrichtung geschaffen, die jeden beliebigen Relingrohrquerschnitt zu spannen vermag, wie dies in den Fig. 1 bis 6 sehr deutlich und dennoch lediglich beispielhaft gezeigt ist.

Zwecks Vermeidung von Spannmarkierungen tragen die am Relingrohr angreifenden Bereiche der Spannvorrichtung 2 Auflagen 27, 28. Diese Auflagen 27, 28 können aus gespritzten Formteilen aus z. B. EPDM bestehen und angeformte Paststifte 29 zum Einrasten in entsprechende, in den unteren Backenteilen 10 und 25 ausgebildete Bohrungen aufweisen. Dadurch ergibt sich eine einfache und kostengünstige Herstellung wie auch Montage für die Auflagen 27, 28.

Zu erwähnen ist noch, daß die gesamte Spannvorrichtung 2 mit allen ihren Einzelteilen eine vormontierte Einbaueinheit ist, die lediglich in den Querträger 1 einzuschieben und festzulegen ist.

## Patentansprüche

1. Dachgepäckträger für Kraftfahrzeuge mit Dachreling, wobei die Dachreling aus zwei zu beiden Fahrzeugseiten am Fahrzeugdach längs verlaufenden Relingrohren (3) besteht, mit einem Querträger (1) als Gepäckträger-Querstange, der sich von einem Relingrohr (3) zum anderen erstreckt und der Querträger (1) ein Hohlprofil mit je einem an seiner Unterseite und in jedem Endbereich des Querträgers (1) angeordneten Längsschlitz (6) ist, mit je einer lösbaren Spannvorrichtung (2) in jedem Endbereich des Querträgers (1) zur Befestigung des Querträgers (1) an den Relingrohren (3), wobei als Haltemittel und Spanneinrichtung in jeden Längsschlitz (6) jeweils ein Abstützbacken (7) und ein Spannbacken (8) eingesetzt sind, jeweils ein oberes Backenteil (9, 24) im Hohlprofil liegt und ein unteres Backenteil (10, 25) nach unten vorsteht, die Abstützbacken (7) am Querträger (1) im Abstand der Relingrohre (3) fixiert sind und im oberen Backenteil (9) eine von der Querträgerstirnseite her zugängliche, in Querträgerlängsrichtung verlaufende Gewindebohrung (11) aufweist, und wobei jeder Spannbacken (8), dessen unteres Backenteil (25) als Bügelteil ausgebildet ist, über einen in der Gewindebohrung (11) des Abstützbackens (7) längsverschiebbar geführten Schraubenbolzen (12) gegen das zugeordnete Relingrohr (3) bewegbar ist, um dieses zumindest teilweise für eine Halterung des Querträgers (1) beim Befestigen der Spanneinrichtung (2) bzw. beim Anziehen des Schraubenbolzens (11) zu umfassen, dadurch gekennzeichnet, daß die Abstützbacken (7) zur Fahrzeugaußenseite und die Spannbacken (8) zur Fahrzeugmitte hin liegen, daß die Spannbacken (8) jeweils nach Art eines zweiarmigen, etwa mittig um eine horizontal ausgerichtete, jeweils einen Abstützbacken (7) durchsetzende Gelenkachse (19) schwenkbaren Hebels ausgebildet sind, daß jeder Spannbacken (8) einen oberen Backenteil (24) aufweist, der eine Durchgangsöffnung (20) im zugehörigen Abstützbacken (7) sowie einen der Längsschlitze (6) des Querträgers (1) durchsetzt und daß der jeweils untere, als Bügelteil ausgebildete Backenteil (25) durch eine Längsverschiebung der zugehörigen, am oberen Backenteil (24) mit ihrem freien Ende angreifenden Schraube (12) gegen das zugeordnete Relingrohr (3) schwenkbar ist.

2. Dachgepäckträger nach Anspruch 1, dadurch gekennzeichnet, daß die Abstützbacken (7) jeweils einen zur Fahrzeugmitte hin gerichteten Fortsatz (16) aufweisen, dessen eine Seite am Querträger (1) abgestützt ist und an dessen dem Querträger (1) abgewandten Seite zwei Lagerstützen (17) sitzen, zwischen denen ein Spannbacken (8) gelagert ist, wobei sich zwischen den Lagerstützen (17) die Durchgangsöffnung (20) für den oberen Backenteil (24) des Spannbackens (8) befindet.

3. Dachgepäckträger nach Anspruch 1 oder 2, dadurch gekennzeichnet, daß sowohl die Abstützbacken (7) als auch die Spannbacken (8) an ihren, an den Relingrohren (3) zur Anlage kommenden Bereichen Auflagen (27, 28) aus einem Material tragen, das weicher als das Backenmaterial ist.

## Claims

1. Roof rack for motor vehicles with roof rails, the roof rails comprising two rail tubes (3) running longitudinally along the vehicle roof on both sides of the vehicle, with a cross-member (1), as the crossbar of the roof rack, which extends from one rail tube (3) to the other, and the cross-member (1) is a hollow profile having a respective longitudinal slot (6) arranged on its underside and in each end region of the cross-member (1), with a respective releasable clamping device (2) in each end region of the cross-member (1) for fastening the cross-member (1) on the rail tubes (3), there being inserted, as holding means and clamping device, into each longitudinal slot (6) a respective supporting jaw (7) and a clamping jaw (8), in each case an upper jaw part (9, 24) lying in the hollow profile and a lower jaw part (10, 25) protruding downwards, the supporting jaws (7) being fixed on the cross-member (1) at the same spacing as the rail tubes (3), and in the upper jaw part (9) having a threaded hole (11) which is accessible from the end side of the cross-member and runs in the longitudinal direction of the cross-member, and each clamping jaw (8), the lower jaw part (25) of which is designed as a curved part, being movable, by means of a screw bolt (12) guided in a longitudinally displaceable manner in the threaded hole (11) of the supporting jaw (7), against the assigned rail tube (3) in order at least partially to surround the latter so as to hold the cross-member (1) when the clamping devise (2) is being fastened and the screw bolt (11) tightened, characterized in that the supporting jaws (7) lie towards the outside of the vehicle and the clamping jaws (8) lie towards the centre of the vehicle, in that the clamping jaws (8) are each designed in the manner of a two-armed lever which can be pivoted approximately centrally around a horizontally directed pivot pin (19) passing in each case through a supporting jaw (7), in that each clamping jaw (8) has an upper jaw part (24) which passes through a through-opening (20) in the relevant supporting jaw (7) as well as one of the longitudinal slots (6) of the cross-member (1), and in that the respectively lower jaw part (25), which is designed as a curved part, can be pivoted against the associated rail tube (3) by longitudinal displacement of the relevant screw (12) acting with its free end on the upper jaw part (24).

2. Roof rack according to Claim 1, characterized in that the supporting jaws (7) each have an extension (16) which is directed towards the centre of the vehicle and one side of which is supported on the cross-member (1) and on the other side of which, which faces away from the cross-member (1), are seated two bearing supports (17) between which a clamping jaw (8) is mounted, the through-opening (20) for the upper jaw part (24) of the clamping jaw (8) being located between the bearing supports (17).

3. Roof rack according to Claim 1 or 2, characterized in that both the supporting jaws (7) and the clamping jaws (8) bear supports (27, 28) on their regions which come to rest against the rail tubes (3), which supports are made of a material which is softer than the material of the jaws.

## Revendications

1. Porte-bagages de toit pour véhicule avec galerie de toit, la galerie de toit étant constituée de deux tubes (3) s'étendant longitudinalement des deux côtés du toit du véhicule, avec une traverse servant de barre transversale de porte-bagages, qui s'étend d'un tube (3) à l'autre et la traverse (1) est un profilé creux avec une fente longitudinale (6) placée sur sa face inférieure et dans chaque zone d'extrémité de la traverse (1), avec un dispositif de serrage (2) amovible dans chaque zone d'extrémité de la traverse (1) pour la fixation de la traverse (1) sur les tubes (3) de la galerie, dans lequel sont insérées, dans chaque fente longitudinale (6), comme moyen de maintien et dispositif de serrage, une mâchoire d'appui (7) et une mâchoire de serrage (8), une partie de mâchoire supérieure (9, 24) se trouve dans le profilé creux et une partie de mâchoire inférieure (10, 25) dépasse vers le bas, les mâchoires d'appui (7) sont fixées sur la traverse (1), à distance des tubes (3) et la partie de mâchoire supérieure (9) présente un trou taraudé (11), accessible à partir du côté frontal de la traverse, s'étendant dans la direction longitudinale de la traverse, et dans lequel chaque mâchoire de serrage (8), dont la partie de mâchoire inférieure (25) est conformée en étrier, est déplaçable par un boulon (12), guidé coulissant longitudinalement dans le trou taraudé (11) de la mâchoire d'appui (7), contre le tube (3) correspondant, pour entourer celui-ci au moins partiellement pour un maintien de la traverse (1) lors de la fixation du dispositif de serrage (2) ou du serrage du boulon (11), caractérisé en ce que les mâchoires d'appui (7) se situent vers le côté extérieur du véhicule et les mâchoires de serrage (8) vers le milieu du véhicule, en ce que les mâchoires de serrage (8) sont conçues chacune à la manière d'un levier à deux bras, pouvant pivoter à peu près au milieu autour d'un axe d'articulation (19), dirigé horizontalement, traversant une mâchoire d'appui (7), en ce que chaque mâchoire de serrage (8) présente une partie de mâchoire supérieure (24), qui traverse une ouverture débouchante (20) dans la mâchoire d'appui (7) correspondante ainsi que l'une des fentes longitudinales (6) de la traverse (1) et en ce que la partie de mâchoire (25) inférieure, conformée en étrier, peut pivoter, par un coulissement longitudinal de la vis (12) correspondante, agissant sur la partie de mâchoire supérieure (24), avec son extrémité libre, contre le tube (3) correspondant.

2. Porte-bagages de toit selon la revendication 1, caractérisé en ce que les mâchoires d'appui (7) présentent chacune un prolongement (16) dirigé vers le milieu du véhicule, dont un côté est soutenu sur la traverse (1) et sur le côté, tourné à l'opposé de la traverse (1), sont placés deux appuis de support (17), entre lesquels est montée une mâchoire de serrage (8), l'ouverture débouchante (20), pour la partie de mâchoire supérieure (24) de la mâchoire de serrage (8), se trouvant entre les appuis de support (17).

3. Porte-bagages de toit selon la revendication 1 ou 2, caractérisé en ce que les mâchoires d'appui (7) ainsi que les mâchoires de serrage (8) portent, sur leur zone venant en application contre les tubes (3), des supports (27, 28) faits d'un matériau qui est plus mou que le matériau des mâchoires.
